**Europäisches Patentamt**

**European Patent Office**

**Office européen des brevets**

(11) Veröffentlichungsnummer: **0 279 782**
**A1**

## (12) EUROPÄISCHE PATENTANMELDUNG

(21) Anmeldenummer: **88810086.4**

(22) Anmeldetag: **12.02.88**

(51) Int. Cl.⁴: **A 47 J 31/00**
**H 05 B 3/82, A 47 J 27/21**

(30) Priorität: **20.02.87 CH 640/87   10.11.87 CH 4382/87**

(43) Veröffentlichungstag der Anmeldung:
**24.08.88   Patentblatt   88/34**

(84) Benannte Vertragsstaaten:
**AT BE CH DE FR GB LI LU NL**

(71) Anmelder: **Lükon Fabrik für elektrothermische Apparate und elektrische Stabheizkörper Paul Lüscher**
**Hauptstrasse 63**
**CH-2575 Täuffelen (CH)**

(72) Erfinder: **Lüscher, Paul**
**Burrirain 52**
**CH-2575 Täuffelen (CH)**

(74) Vertreter: **Ryffel, Rolf**
**c/o Hepp Ryffel AG Bahnhofstrasse 58**
**CH-8001 Zürich (CH)**

(54) **Einrichtung zum Erwärmen von Brühwasser oder Getränken.**

(57) An einem Ständer (20, 21, 22) ist frei nach unten ragend ein tauchsiederartiger elektrischer Heizkörper (23) angeordnet. Ein Gefäss (24), das eine zu erwärmende Flüssigkeit enthält, kann von unten über den Heizkörper (23) gestülpt werden. Der Grund des Gefässes (24) bewegt dabei einen stiftförmigen Taster (30, 31) nach oben, der einen Mikroschalter (34) zum Einschalten des Heizkörpers (23) betätigt. Wenn die Flüssigkeit im Gefäss (24) eine vorbestimmte Temperatur erreicht hat, fällt der obere Teil (30) des Tasters (30, 31), der mit dem unteren Teil (31) über einen Bimetallstreifen gekuppelt ist, wieder nach unten und schaltet den Heizkörper (23) aus. Die Einrichtung eignet sich insbesondere zum einfachen und energiesparanden Erwärmen von kleinen Flüssigkeitsmengen im Haushalt oder auch zum raschen und sauberen Temperieren von Getränken, wie Bier.

Fig. 4

EP 0 279 782 A1

# Beschreibung

## Einrichtung zum Erwärmen von Brühwasser oder Getränken

Das in bisher üblicher Weise z.B. im Haushalt vorgenommene Wärmen von Getränken, z.B. Milch, oder Erhitzen von Brühwasser, z.B. für Tee, Kaffee usw., ist für kleine Mengen oder Einzelportionen vergleichsweise umständlich, zeitraubend und unwirtschaftlich. Wenn man das Erwärmen in einem kleinen Kochtopf auf der Herdplatte vornimmt, müssen ausser der kleinen Flüssigkeitsmenge auch die Herdplatte und der Kochtopf erwärmt werden, was mit einem unerwünschten Zeitverlust und Energieverlust verbunden ist. In dieser Hinsicht günstiger ist der Einsatz eines üblichen Tauchsieders, der unittelbar in die in einem Trinkgefäss oder einem Krug enthaltene Flüssigkeit eingetaucht wird. Die Handhabung des Tauchsieders ist jedoch ebenfalls umständlich. Nach dem Eintauchen in die Flüssigkeit muss der elektrische Stecker des Tauchsieders eingesteckt werden. Wenn die Flüssigkeit in einem Trinkgefäss enthalten ist, das relativ klein ist, muss man dabei und auch während des Aufwärmens der Flüssigkeit den Tauchsieder festhalten, weil er sonst das Trinkgefäss umreisst oder aus diesem herauskippt. Nach dem Aufwärmen wird der Tauchsieder aus der Flüssigkeit herausgenommen und der elektrische Stecker wieder ausgesteckt, und dann muss man einen Platz suchen, so man den Tauchsieder hinstellen, hinhängen oder hinlegen kann, ohne dass der noch heisse Heizkörper des Tauchsieders eine Unterlage oder Wand beschädigen kann.

Aehnliche Probleme treten auf, wenn kalt gelagerte Getränke, z.B. Bier, vor dem Genuss etwas erwärmt bzw. temperiert werden sollen. Für das Temperieren von Bier, insbesondere in Gaststätten, sind verschiedene Praktiken üblich. Beispielsweise wird ein Wasserbad mit warmem Wasser verwendet, in welches die gefüllten Biergläser hineingestellt werden. Ebenfalls gebräuchlich sind das Aufheizen der Gläser in heissem Wasser vor dem Füllen mit Bier, das Warmstellen der Biergläser in einem Ofen usw. Alle diese bekannten Vorgehensweisen sind zeitraubend, unpraktisch und zum Teil auch unhygienisch.

Die Aufgabe der Erfindung besteht daher darin, eine Einrichtung zum Erwärmen von Brühwasser oder Getränken in einem Gefäss zur Verfügung zu stellen, die sich insbesondere für kleinere Flüssigkeitsmengen oder zum Temperieren eignet und die geschilderten Nachteile, die mit den bisher üblichen Vorgehensweisen verbunden sind, vermeidet, als das einfache zeit- und energiesparende und saubere Erwärmen von kleinen Flüssigkeitsmengen oder Temperieren von Getränken ermöglicht.

Die Aufgabe wird mit der im Patentanspruch 1 definierten Einrichtung gelöst.

Bei dieser erfindungsgemässen Einrichtung wird ein Gefäss, z.B. Trinkgefäss oder Krug, welches ein zu erwärmendes Getränk oder Brühwasser enthält, einfach von unten über den Heizkörper geschoben oder auf eine Fussplatte der Einrichtung gestellt und der Heizkörper am Ständer in das Gefäss gesenkt, so dass der Heizkörper in die Flüssigkeit eintaucht, wobei der Taster den Heizkörper einschaltet. Nach dem Erwärmen wird das Gefäss wieder entnommen, wobei der Taster den Heizkörper selbsttätig wieder ausschaltet.

Zweckmässig kann gemäss Patentanspruch 5 eine Thermostatvorrichtung vorgesehen werden, die mit dem Taster in die Flüssigkeit eintaucht und die dafür sorgt, dass der Taster den Heizkörper schon vor dem Entnhemen des Gefässes ausschaltet, wenn die Temperatur der Flüssigkeit einen vorbestimmten Wert erreicht.

Wenn die Einrichtung jedoch lediglich zum Temperieren von Getränken, insbesondere Bier, verwendet werden soll, ist eine Thermostatvorrichtung weniger geeignet. Für diese Anwendung kann man gemäss Patentanspruch 8 einen Zeitzähler anordnen, der mit dem Heizkörper eingeschaltet wird und die Einschaltzeit anzeigt. Das Gefäss kann dann nach einer gewünschten Einschaltzeit, z.B. etwa zehn Sekunden, entnommen werden. Gewünschtenfalls könnte der Zeitzähler den Heizkörper nach einer einstellbaren vorgewählten Einschaltdauer wieder ausschalten.

Ausführungsbeispiele der erfindungsgemässen Einrichtung sind in den Zeichnungen schematisch dargestellt, und zwar zeigen:

Fig. 1 eine Seitenansicht einer Einrichtung zum Erwärmen bzw. Temperieren von Getränken,

Fig. 2 eine Draufsicht zu Fig. 1,

Fig. 3 ein elektrisches Schaltschema der Einrichtung gemäss Fig. 1 und 2,

Fig. 4 eine Seitenansicht einer Einrichtung zum Erwärmen von Brühwasser oder Getränken,

Fig. 5 eine Draufsicht zu Fig. 4,

Fig. 6 eine Variante der Einrichtung gemäss Fig. 4 und 5,

Fig. 7 in grösserem Massstab den unteren Endabschnitt des Tasters der Einrichtung gemäss Fig. 4 und 5 oder gemäss Fig. 6 und

Fig. 8 ein elektrisches Schaltschema der Einrichtung gemäss Fig. 4 und 5 oder gemäss Fig. 6.

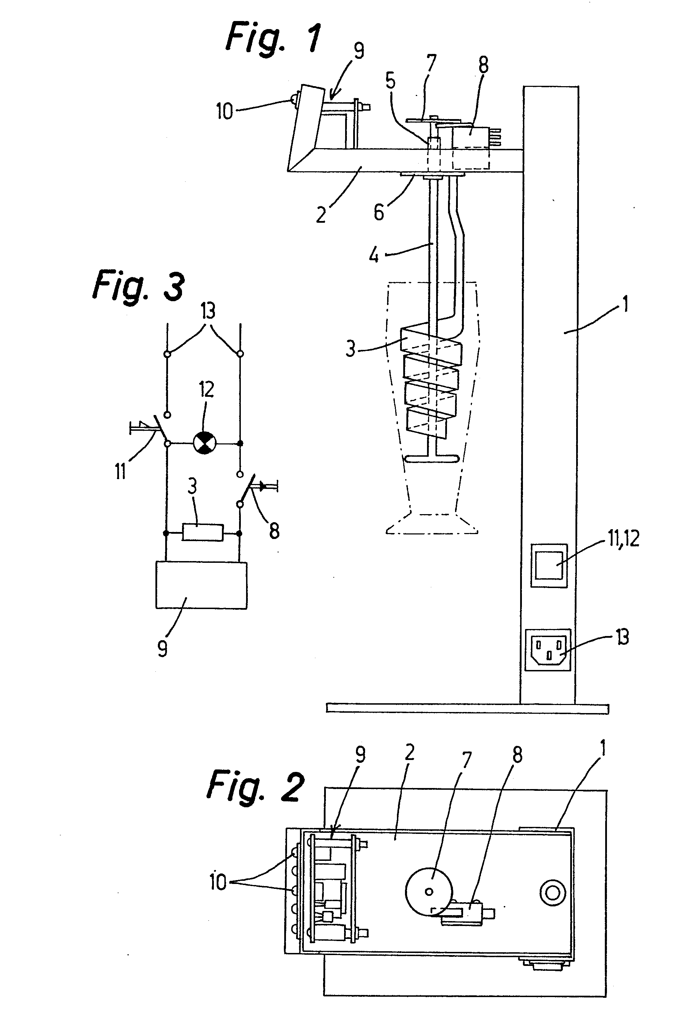

Die in den Fig. 1 bis 3 dargestellte Einrichtung zum Erwärmen bzw. Temperieren von Getränken besitzt einen Ständer, der von einer Säule 1 und einem an dieser angebrachten Ausleger 2 gebildet ist. Ein tauchsiederartiger elektrischer Heizkörper 3 ist am Ausleger 2 frei nach unten ragend befestigt, so dass ein gefülltes Trinkgefäss, z.B. Bierglas (mit unterbrochenen Linien angedeutet), von unten über den Hizkörper 3 gestülpt werden kann.

Weiter ist am Ausleger 2 ein Taster in Form eines vertikalen Stiftes 4 angeordnet, der in einer Büchse 5 zentriert und vertikal verschiebbar geführt ist. Die Büchse 5 ist in einem am Ausleger 2 angebrachten Flansch 6 befestigt. Wenn ein Trinkgefäss von unten über Heizkörper 3 geschoben wird, kommt die konische Innenwand des Trinkgefässes - oder bei einem mehr zylindrischen Trinkgefäss dessen Grund - mit einem Querstift am unteren Ende des Stiftes 4 in Berührung und hebt diesen nach oben, so dass eine am Stift 4 befestigte Scheibe 7 einen Mikroschalter 8 entlastet, der den Stromkreis zum Heizkörper 3 schliesst.

Der tauchsiederartige Heizkörper 3 verläuft vorzugsweise wie dargestellt nach einer Schraubenlinie um den Stift 4 herum und schützt diesen mechanisch. Zwecks Anpassung an Trinkgefässe in der Form von Kelchgläsern ist der Heizkörper 3 nach unten konisch verjüngt.

Zu dem Heizkörper 3 ist ein elektrisches Sekundenzählwerk 9 elektrisch parallelgeschaltet, das jeweils mit dem Einschalten des Heizkörpers gestartet wird und dann die Einschaltdauer des Heizkörpers anzeigt. Das Sekundenzählwerk 9 ist beispielsweise ein elektronischer Blocktimer, der mit fünf von vorn sichtbaren Leuchtdioden 10 ausgerüstet ist, welche jeweils nacheinander nach je 5 Sekunden Heizdauer aufleuchten. Das Bedienungspersonal kann so auf einfachste Weise die gewünschte Aufheizdauer, die natürlich von der Grösse des jeweiligen Trinkgefässes abhängig ist, festlegen.

Im dargestellten Ausführungsbeispiel sind in die Säule 1 ein Schalter 11 mit Signallampe 12 sowie ein Anschluss-Stecker 13 eingebaut. Die Kabeleinführung könnte aber auch direkt erfolgen, der zusätzliche Schalter 11 ist im Prinzip nicht erforderlich.

Auf den Ausleger 2 gehört noch eine Abdeckhaube, die jedoch in der Zeichnung nicht dargestellt ist, damit die im Ausleger angeordneten Teile sichtbar sind.

Statt an die Säule 1 könnte der Ausleger 2 mit den von ihm getragenen Teilen auch direkt an eine Getränke-Ausschankanlage (z.B. Bierzapfsäule) angebaut sein.

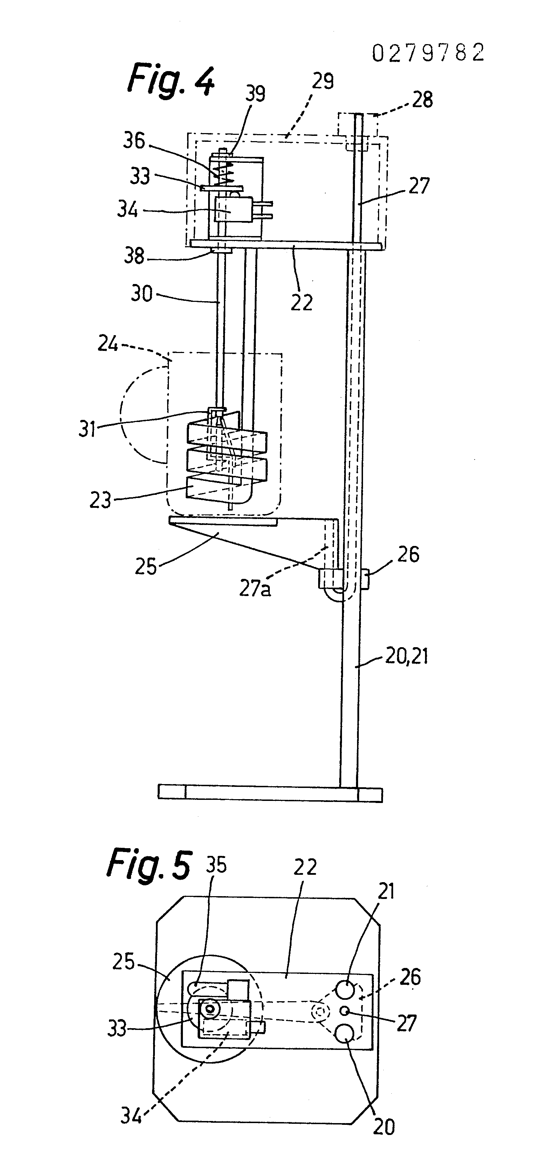

Die in den Fig. 4 und 5 dargestellte Einrichtung zum Erwärmen von Brühwasser oder Getränken besitzt einen Ständer, der von einer aus zwei parallelen, ver tikalen Rohren 20 und 21 bestehenden Säule und einem oben an der Säule angebrachten Ausleger 22 gebildet ist. Ein tauchsiederartiger elektrischer Heizkörper 23 ist am Ausleger 22 frei nach unten ragend befestigt, so dass ein Gefäss, welches ein Getränk oder Brühwasser enthält, z.B. ein Trinkgefäss 24 (in Fig. 4 mit unterbrochenen Linien angedeutet) oder ein Krug, von unten über den Heizkörper 23 gestülpt werden kann.

An der Säule 20, 21 ist bewegbar eine Auflagekonsole 25 gehalten, die in die gezeichnete Lage bewegt wird, um das Gefäss 24 zu tragen, während die im Gefäss enthaltene Flüssigkeit vom Heizkörper 23 erwärmt wird, so dass man das Gefäss nicht die ganze Zeit festhalten muss. Im einzelnen ist die Auflagekonsole 25 auf einem Träger 26 um eine vertikale Achse schwenkbar gelagert. Der Träger 26 ist an den beiden Rohren 20 und 21 vertikal verschiebbar aber gegen Drehung gesichert geführt. Der Träger 26 ist am unteren Ende einer zwischen den Rohren 20 und 21 angeordneten und zu diesen parallelen Gewindespindel 27 angebracht, welche sich durch einen Gewindedrehknopf 28 in der Höhe verstellen lässt. Der Gewindedrehknopf 28 und ein auf dem Ausleger 22 angeordnetes Gehäuse 29, auf dem der Drehknopf 28 gelagert ist, sind in Fig. 4 lediglich mit unterbrochenen Linien angedeutet und in Fig. 5 weggelassen worden.

In der gezeichneten Ausführungsform ist das untere Ende der Gewindespindel 27 um 180° nach oben zurückgebogen und bildet auf dem Träger 26 die Schwenkachse 27a, auf welcher die Auflagekonsole 25 schwenkbar gelagert ist.

Die Höhenverstellung der Gewindespindel 27 und damit der Auflagekonsole 25 ermöglicht eine Anpassung an unterschiedlich dicke Böden von Gefässen 24.

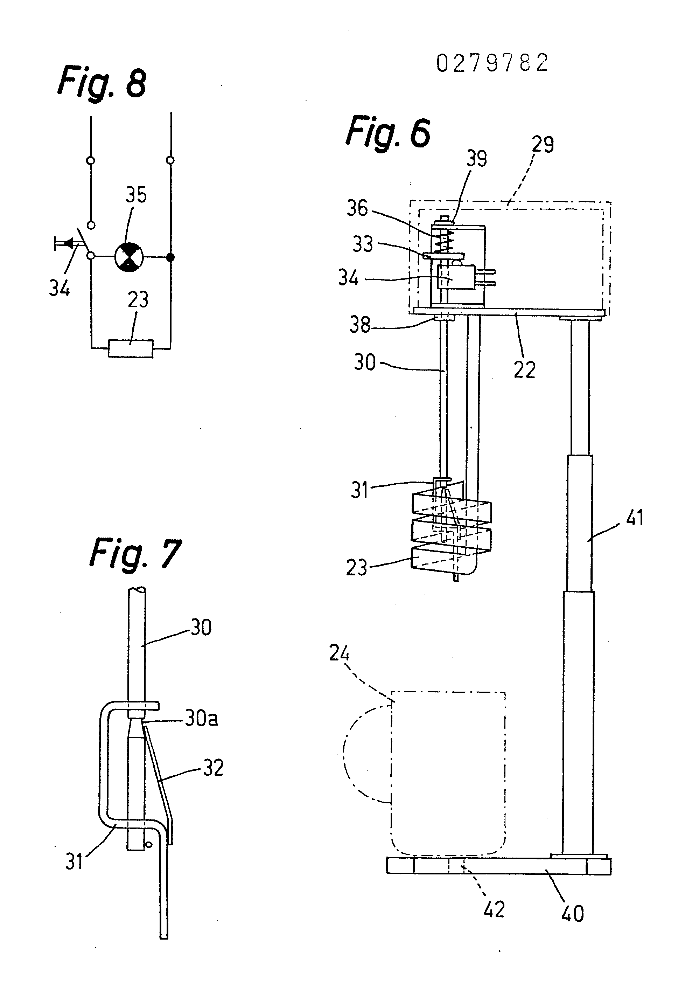

Die Fig. 6 zeigt eine Variante der Einrichtung gemäss Fig. 4 und 5, in welcher die aus den Rohren 20 und 21 bestehende Säule durch eine Säule 41 ersetzt ist, die aus teleskopartig ineinanderschiebbaren Vierkantrohren besteht. Die Vierkantrohre sind in üblicher Weise mit Arretier- und Bremsnuten versehen (nicht dargestellt). Auf dem oberen Ende der Säule 41 ist wieder der Ausleger 22 mit dem Heizkörper 23 angeordnet. Die Auflagekonsole 25 ist in dieser Variante weggelassen; als Auflagefläche für das Gefäss 24, welches ein Getränk oder Brühwasser enthält, dient die Oberseite einer an der Säule 41 angeordneten Fussplatte 40. Zum Erwärmen der Flüssigkeit im Gefäss 24 wird der Heizkörper 23 durch Zusammenschieben der Säule 41 nach unten in das Gefäss 24 hineingesenkt.

Sowohl in Fig. 4 und 5 als auch in Fig. 6 ist am Ausleger 22 jeweils ein Tasterstift 30 angeordnet, der sich vom Ausleger 22 aus vertikal nach unten erstreckt. Der Tasterstift 30 ist in am Ausleger 22 gehaltenen Lagern 38 und 39 vertikal verschiebbar geführt. Auf dem unteren Ende des Stiftes 30 ist ein Bügel 31 vertikal verschiebbar gelagert. Ein an dem Bügel 31 befestigter Bimetallstreifen 32 greift mit einem freien Ende klinkenartig in eine Kerbe 30a im Stift 30 ein (Fig. 7). Die Anordnung des Bimetallstreifens 32 könnte auch umgekehrt sein, das heisst, der Bimetallstreifen könnte am Stift 30 befestigt sein und mit einem freien Ende in eine entsprechende Ausnehmung des Bügels 31 eingreifen.

Wenn ein Gefäss 24 von unter über den Heizkörper 23 geschoben wird (Fig. 4) oder der Heizkörper 23 in das Gefäss 24 gesenkt wird (Fig. 6), kommt der Grund des Gefässes mit dem unteren Ende des Bügels 31 in Berührung und hebt den Bügel 31 und damit über den in die Kerbe 30a eingreifenden Bimetallstreifen 32 auch den Stift 30 nach oben, so dass eine am Stift 30 befestigte Scheibe 33 einem Mikroschalter 34 entlastet, der den Stromkreis zum Heizkörper 23 schliesst. Eine zum Heizkörper 23 elektrisch parallelgeschaltete Signallampe 35 brennt, solange der Heizkörper gespeist ist.

Wenn die Temperatur der im Gefäss 24 enthaltenen Flüssigkeit und damit auch die Temperatur des in die Flüssigkeit eingetauchten Bimetallstreifens 32 einen vorbestimmten Wert erreicht, biegt sich der Bimetallstreifen 32 nach aussen aus der Kerbe 30a heraus, so dass sich der Stift 30 wieder nach unten bewegt und die Scheibe 33 den Mikroschalter 34 öffnet. Die Signallampe 35 erlischt. Das Gefäss 24 mit der erwärmten Flüssigkeit kann dann nach Wegschwenken der Auflagekonsole 25 (Fig. 4) oder Herausheben des Heizkörpers 23 (Fig. 6), entnommen werden. Der Stift 30 ist durch eine Feder 36, die von oben auf die Scheibe 33 drückt, in Abwärtsrichtung federbelastet.

Der tauchsiederartige Heizkörper 23 verläuft vorzugsweise wie dargestellt nach einer Schraubenlinie um das untere Ende des Stiftes 30 und um den Bügel 31 und den Bimetallstreifen 32 herum und schützt diese Teile mechanisch.

In Fig. 6 ist noch ein in der Fussplatte 40 vorgesehenes Loch 42 angedeutet, welches das untere Ende des Bügels 31 aufnimmt, wenn der Heizkörper 23 auf die Fussplatte 40 gesenkt wird und auf dieser kein Gefäss 24 steht.

## Patentansprüche

1. Einrichtung zum Erwärmen von Brühwasser oder Getränken in einem Gefäss, gekennzeichnet durch einen tauchsiederartigen elektrischen Heizkörper (3; 23), der frei nach unten ragend an einem Ständer (1, 2; 20, 21, 22; 41, 22) angeordnet ist, und einen ebenfalls an dem Ständer (1, 2; 20, 21, 22; 41, 22) angeordneten Taster (4; 30, 31), der von dem Gefäss bewegbar ist, wenn dieses den Heizkörper (3; 23) umfasst, zum Betätigen eines im Stromkreis des Heizkörpers (3; 23) liegenden Schalters (8; 34).

2. Einrichtung nach Anspruch 1, dadurch gekennzeichnet, dass der Taster (4; 30, 31) and dem Ständer (1, 2; 20, 21, 22; 41, 22) nach unten ragend angeordnet ist und durch Berührung mit dem Grund oder einer konischen Innenwand des den Heizkörper (3; 23) umfassenden Gefässes bewegbar ist.

3. Einrichtung nach Anspruch 2, dadurch gekennzeichnet, dass der Taster (4; 30, 31) einen etwa vertikalen und an dem Ständer (1, 2; 20, 21, 22; 41, 22) vertikal verschiebbar gehaltenen Stift (4; 30) aufweist, der mit dem Schalter (8; 34) so zusammenwirkt, dass in einer angehobenen Lage des Stiftes (4; 30) der Schalter (8; 34) geschlossen ist.

4. Einrichtung nach Anspruch 3, dadurch gekennzeichnet, dass der vertikale Stift (4) an seinem unteren Ende einen Querstift trägt.

5. Einrichtung nach Anspruch 3, dadurch gekennzeichnet, dass der Taster (30, 31) ein unteres Endelement (31) aufweist, das auf dem unteren Ende des Stiftes (30) vertikal verschiebbar gehalten ist und mit dem Stift (30) über eine mechanische Thermostatvorrichtung (32, 30a) gekuppelt ist, solange die Temperatur der Thermostatvorrichtung unter einem vorbestimmten Wert liegt.

6. Einrichtung nach Anspruch 5, dadurch gekennzeichnet, dass die Thermostatvorrichtung (32, 30a) einen Bimetallstreifen (32) enthält, der an dem Endelement (31) oder am Stift befestigt ist und mit einem freien Ende klinkenartig in eine Ausnehmung (30a) im Stift (30) bzw. im Endelement eingreift.

7. Einrichtung nach einem der Ansprüche 3 bis 6, dadurch gekennzeichnet, dass der Stift (4; 30) bezüglich des Ständers (1, 2; 20, 21, 22; 41, 22) in Abwärtsrichtung federbelastet ist.

8. Einrichtung nach einem der Ansprüche 1 bis 4, gekennzeichnet durch einen zu dem Heizkörper (3) elektrisch parallelgeschalteten Zeitzähler (9, 10), der jeweils die Einschaltzeit des Heizkörpers anzeigt.

9. Einrichtung nach Anspruch 8, dadurch gekennzeichnet, dass der Zeitzähler (9, 10) mehrere Lichtquellen, z.B. Leuchtdioden (10), aufweist, die jeweils nach dem Einschalten des Heizkörpers (3) in vorbestimmten Zeitabständen nacheinander aufleuchten.

10. Einrichtung nach einem der Ansprüche 2 bis 9, dadurch gekennzeichnet, dass der Heizkörper (3; 23) schraubenlinienförmig um den Taster (4; 30, 31) herum verläuft und denselben schützt.

11. Einrichtung nach Anspruch 10, dadurch gekennzeichnet, dass der Heizkörper (3) nach einer gegen unten konisch verengten Schraubenlinie verläuft.

12. Einrichtung nach einem der Ansprüche 1 bis 11, gekennzeichnet durch eine am Ständer (20, 21, 22) bewegbar gehaltene Auflagekonsole (25) zum Unterstützen des den Heizkörper (23) umfassenden Gefässes.

13. Einrichtung nach Anspruch 12, dadurch gekennzeichnet, dass die Auflagekonsole (25) an einer Säule (20, 21) des Ständers um eine vertikale Achse schwenkbar gehalten ist.

14. Einrichtung nach Anspruch 13, dadurch gekennzeichnet, dass die Auflagekonsole (25) an der Säule (20, 21) höhenverstellbar gehalten ist.

15. Einrichtung nach Anspruch 14, dadurch gekennzeichnet, dass die Auflagekonsole (25) auf einem Träger (26) schwenkbar gelagert ist, der an der Säule (20, 21) vertikal verschiebbar aber gegen Drehung gesichert gehalten ist und der mittels einer Gewindespindel (27) heb- und senkbar ist.

16. Einrichtung nach einem der Ansprüche 1 bis 11, dadurch gekennzeichnet, dass der Ständer (41, 22) eine Säule (41) und einen auf der Säule (41) höheneinstellbar gehaltenen Ausleger (22) aufweist, an welchem der Heizkörper (23) und der Taster (30, 31) gehalten sind.

0279782

Fig. 1

Fig. 3

Fig. 2

0279782

Fig. 4

Fig. 5

**Fig. 8**

**Fig. 6**

0279782

**Fig. 7**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 467 816  (WAHLBERG) <br> * Insgesamt * <br> --- | 1 | A 47 J  31/00 <br> H 05 B   3/82 <br> A 47 J  27/21 |
| X | DE-C-  819 880  (NIETERT) <br> * Insgesamt * <br> --- | 1-3,16 | |
| X | GB-A-1 019 921  (ANNABLE) <br> * Insgesamt * <br> --- | 1 | |
| A | US-A-1 570 507  (LIGHTFOOT) <br> * Insgesamt * <br> --- | 1 | |
| A | US-A-4 546 237  (COLLINS) <br> --- | | |
| A | CH-A-  404 822  (GROVES) <br> --- | | |
| A | US-A-3 079 485  (GROVES) <br> ----- | | |

**RECHERCHIERTE SACHGEBIETE (Int. Cl.4)**

A 47 J
H 05 B
B 60 N

**Der vorliegende Recherchenbericht wurde für alle Patentansprüche erstellt**

| Recherchenort | Abschlußdatum der Recherche | Prüfer |
|---|---|---|
| DEN HAAG | 20-05-1988 | SCHARTZ J. |

EPO FORM 1503 03.82 (P0403)